(19) Europäisches Patentamt / European Patent Office / Office européen des brevets

(11) **EP 2 559 970 B1**

(12) **EUROPEAN PATENT SPECIFICATION**

(45) Date of publication and mention
of the grant of the patent:
**16.09.2015 Bulletin 2015/38**

(21) Application number: **11768661.8**

(22) Date of filing: **04.02.2011**

(51) Int Cl.:
***G01D 5/20*** (2006.01)

(86) International application number:
**PCT/JP2011/052334**

(87) International publication number:
**WO 2011/129140 (20.10.2011 Gazette 2011/42)**

(54) **DISPLACEMENT SENSOR AND METHOD FOR DETECTING DISPLACEMENT**

VERSCHIEBUNGSSENSOR UND VERFAHREN ZUR ERKENNUNG EINER VERSCHIEBUNG

CAPTEUR DE DÉPLACEMENT ET PROCÉDÉ DE DÉTECTION DE DÉPLACEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2010 JP 2010091105**

(43) Date of publication of application:
**20.02.2013 Bulletin 2013/08**

(73) Proprietor: **Murata Machinery, Ltd.
Kyoto-shi, Kyoto 601-8326 (JP)**

(72) Inventor: **SHIMIZU Tetsuya
Kyoto-shi
Kyoto 612-8686 (JP)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
**EP-A1- 0 580 477          JP-A- 1 237 413
JP-A- 2004 513 357      JP-A- 2009 002 660
US-A- 5 391 970          US-A1- 2004 006 443**

EP 2 559 970 B1

**Description**

Technical Field

The present invention relates to a displacement sensor for detecting displacement of mobile bodies such as machine tool heads, workpieces, transfer devices and transport vehicles, and to a displacement detection method.

Background Art

The inventors have developed displacement sensors for measuring displacement of machine tool heads, transfer devices, transport devices, transport vehicles and the like (Patent Literature 1: JP 2003-139563A, Patent Literature 2: JP 2009-2660A). In Patent Literature 1, a plurality of marks are provided along a shaft of an adsorption type transport device or the like, by providing magnetic portions and nonmagnetic portions alternately on the shaft, with one magnetic portion and one nonmagnetic portion serving as one mark. An alternating current is applied as an input signal to primary coils consisting of four coils, for example. When a phase difference between the input alternating current and an output signal from four secondary coils, for example, disposed in parallel with the primary coils is derived, the phase difference represents displacement based on the marks. In Patent Literature 2, rather than distinguishing between primary coils and secondary coils, an alternating current is applied as a primary-side signal to a coil array consisting of coils connected in series, and a potential of a connection point between the coils is taken as a secondary-side signal. Mark-based displacement (position of mobile body) is similarly derived from the phase difference between the primary-side signal and the secondary-side signal.

Patent Literature 2 gives a detailed description of phase difference detection. When the waveform of the alternating current is given as $\sin\omega t$, two signals $a\cdot\cos\theta\cdot\sin\omega t$ and $a\cdot\sin\theta\cdot\sin\omega t$ are taken from the coils, $\theta$ being the phase difference and indicating a relative position in relation to the marks in a range of 0 to $2\pi$. When the phase of the signal $a\sin\theta\cdot\sin\omega t$ is advanced 90 degrees to $a\cdot\sin\theta\cdot\cos\omega t$ and added to $a\cdot\cos\theta\cdot\sin\omega t$, a signal $a\cdot\sin(\theta+\omega t)$ is obtained from the additional theorem. The counter is reset at the point in time that the input signal $\sin\omega t$ crosses zero, and $\theta$ is obtained when the counter is latched at the point in time that the signal $a\cdot\sin(\theta+\omega t)$ crosses zero, with $\theta$ representing the displacement. In the case where the signal $a\cdot\sin(\theta+\omega t)$ crosses zero first, a time lag until the signal $\sin\omega t$ subsequently crosses zero is derived.

Because $\theta$ is derived by zero crossing, as described above, displacement is only derived once or twice during one period of the input AC signal. Even in the case where zero crossing is not used, the detection frequency per period is limited since phase difference is detected. The fact that the frequency with which displacement is derived per unit time is limited causes problems with movement of a machine tool head or workpieces, transfer of goods, control of a transport device or a transport vehicle, and the like. With these systems, a servo system for movement of a head, travel of a transport device or the like receives displacements from a displacement sensor, and performs control based on a target displacement, that is, error from a target position. For this reason, displacement needs to be derived within a short time period, and in particular needs to be derived in accordance with the control period of the servo system rather than being derived periodically to suit the displacement sensor.

Citation List

Patent Literature

Patent Literature 1: JP 2003-139563A
Patent Literature 2: JP 2009-2660A

EP 0 580 477 A1 discloses a position detecting apparatus with a sampling function, comprising a waveform generator for generating repetitive periodic waveforms in relation to a moving object to be measured, and a processor for sampling the output of the waveform generator and, after digitizing the same, processing the digital data to detect the position of the object. The processor first estimates the current position from the data obtained in the preceding detection and then determines the current position on the basis of the estimated position. The apparatus can be incorporated in a system for driving an optical unit in a video camera, wherein the object to be measured is a moving focus lens member and is actuated by a direct drive motor.

US 2004/006443 A1 discloses a method for position determination in a position measuring device that includes digitizing analog position data from a detector unit within time intervals of an internal clock rate and calculating position data from the digitized data. A period of time between a pulse of said internal clock until an appearance of an external trigger signal is determined at least two position data are processed together with the period of time.

US 5 391 970 A discloses motion controllers for controlling servo motors, which are connected by a digital communications link so that controlled axes of the motion controllers may be slaved together regardless of their physical proximity. A given controller broadcasts position or command signals on the communications link in response to a request report message from any another controller. A second request report message may stop the broadcasting to conserve link capacity. Time shifting implicit in the link messages is corrected by estimating the velocity of the master axis and extrapolating the position to the local axes' time of updating.

Summary of the Invention

Problems to be Solved by the Invention

An object of the present invention is to enable displacement to be output without delay caused by the detection period of a displacement sensor, when output of displacement is requested from outside.

Another object of the present invention is to enable displacement to be output more quickly, and, in particular, without delay caused by arithmetic operations.

Means for Solving the Problem

This object is achieved by a displacement sensor according to claim 1 and a displacement detection method according to claim 2.

The present invention is directed to a displacement sensor for detecting displacement using a phase difference between an input signal waveform and an output signal waveform, including:

a timer for outputting a detection time when the sensor detects a displacement;
a storage for storing at least two previous detected displacements together with detection times thereof; and
an operation unit for extrapolating, when output is requested from outside, the at least two previous displacements to a current displacement, based on the at least two previous displacements and detection times and a time at which output was requested, and outputting the current displacement.

The present invention is further directed to a method for detecting displacement with a displacement sensor, using a phase difference between an input signal waveform and an output signal waveform, including the steps of:

deriving a detection time using a timer when the sensor detects a displacement;
storing at least two previous detected displacements together with detection times thereof; and
extrapolating, when output is requested from outside, the at least two previous displacements to a current displacement, based on the at least two previous displacements and detection times and a time at which output was requested, and outputting the current displacement.

With a displacement sensor that detects displacement using the phase difference between an input signal waveform and an output signal waveform, the use of phase difference means that displacement is only detected once, for example, per input signal period. In contrast, with an external servo system or the like that performs control with the signal of the displacement sensor, the current position is required at a timing that depends on the control period in the servo system, and, moreover, the control period is generally shorter than the period in the displacement sensor. In view of this, rather than shortening the detection period of the displacement sensor or constantly interpolating the current position within the displacement sensor, the receipt of a request for output from outside is used as a trigger, and the current displacement is derived through extrapolation based on two previous displacements and detection times and the time at which output was requested, and output. This enables displacement to be output in real time in response to a request from the external servo system. Also, the detection period of the displacement sensor does not need to be shortened, and because the current displacement is not constantly being derived through extrapolation and output when requested, extrapolation may also be performed with simple circuitry.

The operation unit calculates the current displacement by

$$D_r = D_i + (r + \tau - t_i) \times (D_i - D_{i-1})/(t_i - t_{i-1})$$

where $D_i$ and $D_{i-1}$ are the two previous displacements, $t_i$ and $t_{i-1}$ are the two previous detection times, r is the time at which output was requested, and Dr is the current displacement. The above operation may be executed quickly because of its simplicity, and there is no delay caused by averaging as compared with the case where past data over a longer span is used.

The operation unit derives the displacement at time r+τ as the current displacement, where τ is the operation delay in the operation unit.

This enables the influence of the operation delay to be reduced to substantially zero. As far as the external servo system or the like is concerned, displacement is requested at time r and received at time r+τ, with this configuration enabling receipt of data that is extremely close to the actual displacement at time r+τ.

Brief Description of Drawings

FIG. 1 is a block diagram of a linear sensor and the vicinity thereof according to an embodiment.
FIG. 2 is a block diagram of constituent elements of a linear sensor from a coil array to a signal processor according to an embodiment.
FIG. 3 is a block diagram of an operation unit of a linear sensor according to an embodiment.
FIG. 4 is a view of extrapolation of a position signal in a linear sensor according to an embodiment

Best Mode for Carrying Out the Invention

Hereinafter, an optimal embodiment for carrying out the present invention will be described. The scope of the invention should be construed in view of the description of the claims together with the description of the specification and well known techniques in this field according to the understanding of a person skilled in the art.

Embodiment

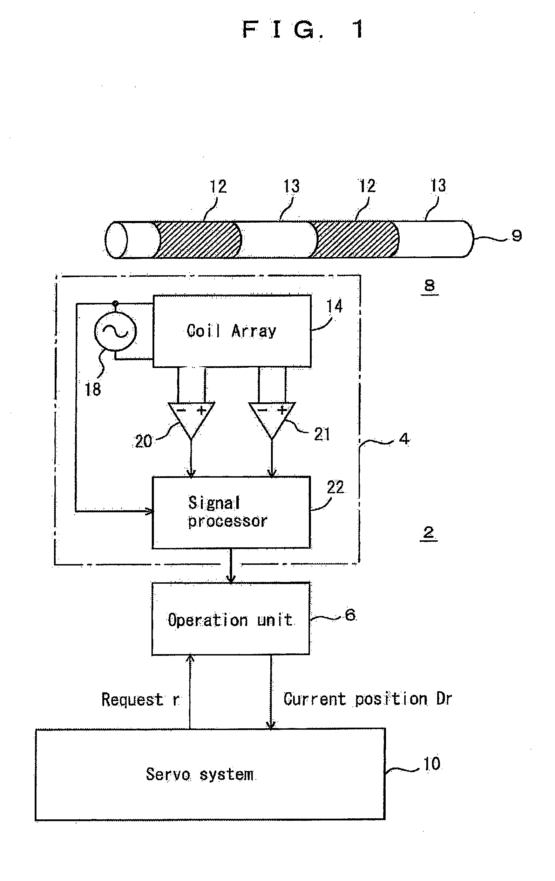

A linear sensor 2 according to an embodiment is shown in FIG. 1 to FIG. 4. The linear sensor 2 consists of a linear sensor main body 4 and an operation unit 6, and detects displacement based on an external magnetic mark 8. 10 denotes a servo system, and is a drive for a machine tool head, a drive for workpieces, an actuator for a transfer device, an actuator for an adsorption type transport device, a travel controller for a transport vehicle, or the like. The servo system 10 requests the linear sensor 2 for a current position at time r, receives a current position Dr at time r+τ because of delay τ, and performs position control, velocity control, or the like. The servo system 10 compares the current position with a target position every internal control period, and generates a velocity instruction or the like so as to eliminate positional error. Accordingly, time r at which the current position is requested is determined at the convenience of the servo system 10, and is not determined at the convenience of the linear sensor 2.

The magnetic mark 8, herein, has marks with non-magnetism 12 and marks with magnetism 13 that are arranged alternately in a longitudinal direction along a shaft 9, and is configured such that the displacement of the shaft 9 is detected. However marks may be disposed around the circumference of a turntable or the like, or marks may be disposed along a travel rail or the like. The linear sensor main body 4 is provided with a coil array 14 and a primary AC power supply 18, with an output voltage waveform of the AC power supply being represented by $\sin\omega t$. Four signals, for example, are taken from the coil array 14, two signals of which are input to an operational amplifier 20, and the remaining two signals of which are input to an operational amplifier 21. Displacement based on the marks is derived by signal processing the output signals from the operational amplifiers 20 and 21 in a signal processor 22.

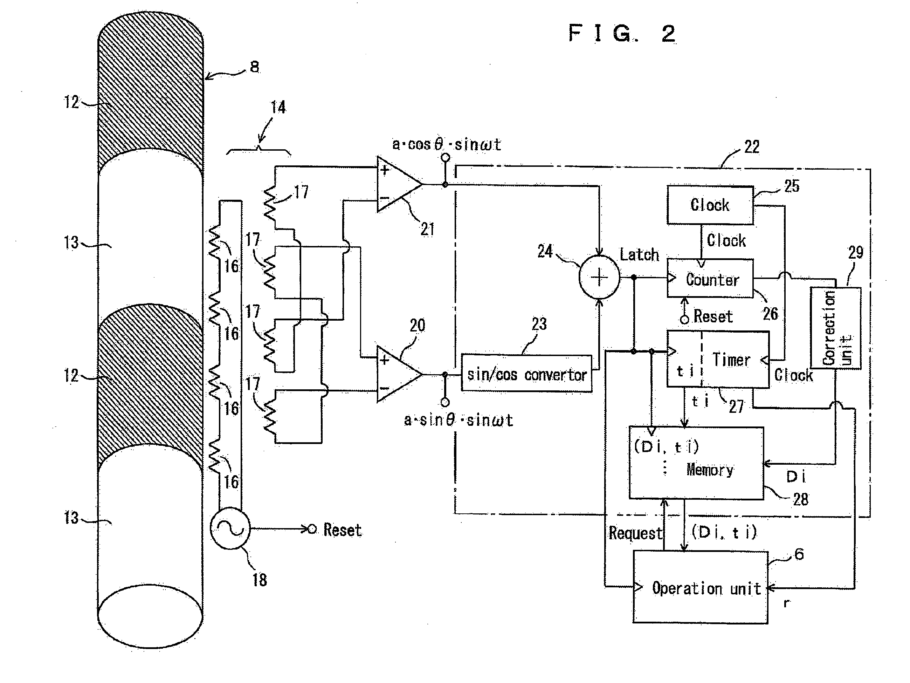

A configuration of the signal processor 22 is shown in FIG. 2. In the coil array 14, four primary coils 16, for example, are connected in series, and the AC power supply 18 inputs an alternating current whose frequency is around 10 kHz to 20 kHz, for example. Also, because the timing at which the output of the AC power supply 18 will be 0, that is, the timing at which $\omega t = n\pi$ (n being a natural number) is important to the signal processor 22, a reset signal is output at $\omega t = n\pi$. Four secondary coils 17, for example, are disposed in parallel with the primary coils 16, and the result of an induced electromotive force produced by the current flowing through the primary coils 16 being modulated by the marks 12 and 13 is taken as a signal and input to the operational amplifiers 20 and 21. An $a \cdot \sin\theta \cdot \sin\omega t$ signal, for example, is obtained from the operational amplifier 20, and an $a \cdot \cos\theta \cdot \sin\omega t$ signal is obtained from the operational amplifier 21. Here the primary coils 16 and the secondary coils 17 are separate coils but may be the same coils, as shown in Patent Literature 2.

A converter 23 converts the $a \cdot \sin\theta \cdot \sin\omega t$ signal into an $a \cdot \sin\theta \cdot \cos\omega t$ signal. For example, the converter 23, which is constituted by a delay circuit consisting of a memory, delays the signal by a quarter period in relation to $\sin\omega t$ and furthermore reverses the sign. The embodiment is not limited to such a technique, and the signal of the operational amplifier 20 may be multiplied by $\cot\omega t$. An adder 24 adds the $a \cdot \cos\theta \cdot \sin\omega t$ signal and the $a \cdot \sin\theta \cdot \cos\omega t$ signal, and

outputs an a·sin(ωt+θ) signal using the additional theorem. The signal a·sin(ωt+θ) may be replaced by a·sin(ωt-θ). A clock circuit 25 generates clock signals, a counter 26 counts the clock signals and resets the count value in response to a reset signal from the AC power supply 18. The counter is then latched at the point in time that the signal from the adder 24 is 0. Because the reset signal is generated at sinωt = 0 and a latch signal is generated at sin(ωt+θ) = 0, the time lag therebetween represents θ, with θ being the displacement based on the marks. As described above, displacement may be detected once or twice, for example, during one period of the AC signal.

27 denotes a timer which derives the time by counting the clocks from the clock circuit 25, and latches the time of an output buffer in the timer 27 in response to a latch signal from the adder 24. The displacement θ is data produced every pairing of the marks 12 and 13, with θ being corrected by the position (offset) of the marks by a correction unit 29 to derive a displacement Di that is independent of the marks. 28 is a memory which stores the displacement Di together with time ti at which the ith θ was detected.

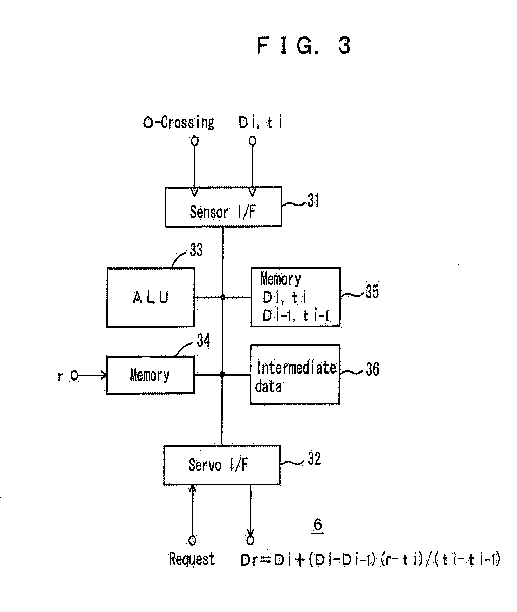

A configuration of the operation unit 6 is shown in FIG. 3. 31 denotes a sensor interface which is an interface with the linear sensor main body 4, and 32 denotes a servo interface which is an interface with the servo system. 33 denotes an arithmetic logic unit, and 34 denotes a memory which stores time r at which the displacement output request is received from the servo system. 35 denotes a memory which stores at least the two previous pairs of displacement/time data (Di, ti) and (Di-1, ti-1). A memory 36 stores intermediate data required in calculating the current position, and specifically stores (Di-Di-1)/(ti-ti-1).

Assume that a request for output of displacement has been made to the servo interface 32 by the servo system. The memory 34 constantly receives the current time r from the timer of the linear sensor main body, and latches the current time r with a signal from the servo interface 32. The sensor interface 31 receives the pairing of the latest displacement and detection time thereof (Di, ti) from the memory of the linear sensor main body in response to a latch signal (zero-crossing signal) from the adder of the linear sensor main body, and stores the received data in the memory 35. The memory 35 is a ring memory for storing two sets of data, for example, and replaces old data with new data whenever a zero crossing occurs. The memory 36 stores the intermediate data derived by the arithmetic logic unit 33 from the data in the memory 35.

The arithmetic logic unit 33 derives displacement Dr at time r by

$$Dr = Di + (Di - Di\text{-}1)\,(r - ti)/(ti - ti\text{-}1)$$

and outputs displacement Dr from the servo interface 32. The arithmetic logic unit 33 thus calculates Dr when the servo system requests the current displacement, and responds at delay time $\tau$. Although the data required in the operation may be acquired from the linear sensor main body each time, in the embodiment this data is stored in advance in the memories 35 and 36, shortening the processing time. In particular, (Di-Di-1)/(ti-ti-1) is stored, accelerating processing.

In the arithmetic logic unit 33, one multiplication and one addition, for example, are required in order to calculate the current displacement Dr. A slight time delay $\tau$ thereby arises. In order to solve this problem, the memory 34 stores r+$\tau$ instead of the actual time r, derives the displacement at time r+$\tau$ instead of displacement Dr at time r, and outputs the derived displacement as displacement Dr. Also, the data in the memories 35 and 36 is updated in the idle time after processing the request for displacement from the servo system. The operation unit 6 may be realized by a digital signal processor, a field programmable gate array, a one-chip microprocessor, or the like.

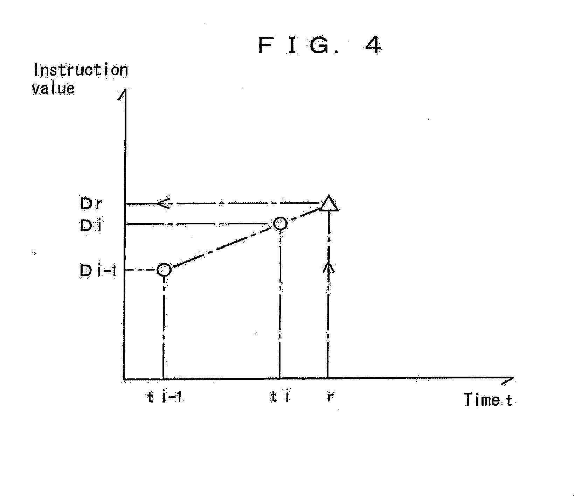

FIG. 4 shows time and instruction value (output current displacement) in the embodiment. For example, displacement Di-1 is derived at time ti-1 and displacement Di is derived at time ti. When the current displacement Dr is requested at time r between time ti and the next signal, the signals of time ti-1 and time ti are extrapolated and output as displacement Dr. In the case of addressing the problem of the operation delay in the operation unit 6 as mentioned above, the displacement at time r+$\tau$ instead of the current time r is output because time $\tau$ which is equivalent to the operation delay is substantially constant.

In the embodiment, the two previous displacements and times are extrapolated, and the current displacement is derived. Alternatively the three previous displacements and times, for example, may be stored, and the current displacement may be extrapolated with a quadratic curve. For example, the following processing is performed in order to estimate the current displacement with a quadratic curve from displacements Di, Di-1 and Di-2 and times ti, ti-1 and ti-2. Acceleration a is given by (Di-Di-1)/(ti-ti-1)-(Di-1-Di-2)/(ti-1-ti-2). Change h in displacement based on acceleration is given by h = a/2·(r-ti)$^2$. Correction h based on acceleration is added to an estimated value of the current displacement extrapolated by a linear function as described above.

In the embodiment, a linear sensor consisting of a combination of a magnetic mark and coils was described. However, alternatively the phase difference between the phase of reflected light and the phase on the primary side may be detected, using a laser signal obtained by modulating the light intensity with an alternating current as the primary-side signal. Also, an ultrasonic wave signal may be modulated by a sine wave, and the phase difference between the ultrasonic wave signal on the primary side and the ultrasonic wave signal of a reflected wave may be detected.

The following effects are obtained with the embodiment.

(1) The current displacement is output at the point in time that an external system such as a servo system requests output, without delay caused by the input signal period of the displacement sensor.
(2) The current displacement is quickly derived with a very few operations when derived by a linear operation.
(3) The influence of the operation delay may be easily corrected by replacing time r with time r+τ when delay τ of the operation unit is corrected.

DESCRIPTION OF REFERENCE NUMERALS

| 2 | Linear sensor |
| 4 | Linear sensor main body |
| 6 | Operation unit |
| 8 | Magnetic mark |
| 9 | Shaft |
| 10 | Servo system |
| 12 | Mark with non-magnetism |
| 13 | Mark with magnetism |
| 14 | Coil array |
| 16 | Primary coil |
| 17 | Secondary coil |
| 18 | AC power supply |
| 20, 21 | Operational amplifier |
| 22 | Signal processor |
| 23 | Converter |
| 24 | Adder |
| 25 | Clock circuit |
| 26 | Counter |
| 27 | Timer |
| 28 | Memory |
| 29 | Correction unit |
| 31 | Sensor interface |
| 32 | Servo interface |
| 33 | Arithmetic logic unit |
| 34-36 | Memory |

**Claims**

1. A displacement sensor (2) for detecting displacement using a phase difference between an input signal waveform and an output signal waveform, in order to output, in response to a request from a servo system (10) for generating an instruction to eliminate error between the current position and the target position by comparing a current position and a target position every control period, the current position to the servo system (10), comprising:

a counter (26) counting clock signals from a clock circuit (25), wherein the counter (26) resets the count value in response to a reset signal from an AC power supply (18) of the displacement sensor (2) and is latched at a point in time when the input signal waveform is zero;
a timer (27) for outputting a detection time when the counter (26) is latched due to the sensor detecting a displacement;
a storage (28) for storing at least two previous detected displacements together with detection times thereof; and
an operation unit (6) for extrapolating, when output is requested from the servo system (10), the at least two previous displacements to a current displacement, based on the at least two previous displacements and detection times and a time at which output was requested, and outputting the current displacement,
the storage (28) further storing $(D_i - D_{i-1})/(t_i - t_{i-1})$, and
the operation unit (6) being configured to derive a displacement at time r+τ as a current displacement $D_r$ by

$$D_r = D_i + (r+\tau-t_i) \times (D_i-D_{i-1})/(t_i-t_{i-1})$$

using the value of $(D_i-D_{i-1})/(t_i-t_{i-1})$ stored in the storage, and output the current displacement $D_r$ to the servo system as the current position,

where Di and $D_{i-1}$ are the two previous displacements, ti and $t_{i-1}$ are the two previous detection times, r is the time at which output was requested, Dr is the current displacement, and $\tau$ is an operation delay in the operation unit (6).

2. A displacement detection method for detecting displacement with a displacement sensor (2), using a phase difference between an input signal waveform and an output signal waveform, in order to output, in response to a request from a servo system (10) for generating an instruction to eliminate error between the current position and the target position by comparing a current position and a target position every control period, the current position to the servo system (10), comprising the steps of:

deriving a detection time using a timer (27) when the sensor detects a displacement, wherein deriving the detection time comprises a counter (26) counting clock signals from a clock circuit (25), wherein the counter (26) resets the count value in response to a reset signal from an AC power supply (18) of the displacement sensor (2) and is latched at a point in time when the input signal waveform is zero, and a timer outputting the detection time when the counter (26) is latched;

storing at least two previous detected displacements together with detection times thereof; and

extrapolating, when output is requested from the servo system (10), the at least two previous displacements to a current displacement, based on the at least two previous displacements and detection times and a time at which output was requested, and outputting the current displacement, using an operation unit (6),

the storage further storing $(D_i-D_{i-1})/(t_i-t_{i-1})$, and

the operation unit (6) deriving a displacement at time r+$\tau$ as a current displacement $D_r$ by

$$D_r = D_i + (r+\tau-t_i) \times (D_i-D_{i-1})/(t_i-t_{i-1})$$

using the value of $(D_i-D_{i-1})/(t_i-t_{i-1})$ stored in the storage, and outputting the current displacement $D_r$ to the servo system as the current position,

where $D_i$ and $D_{i-1}$ are the two previous displacements, $t_i$ and $t_{i-1}$ are the two previous detection times, r is the time at which output was requested, Dr is the current displacement, and $\tau$ is an operation delay in the operation unit (6).

**Patentansprüche**

1. Ein Verschiebungssensor (2) zum Erfassen einer Verschiebung unter Verwendung eines Phasenunterschieds zwischen einem Eingangssignal-Signalverlauf und einem Ausgangssignal-Signalverlauf, um, ansprechend auf eine Anforderung eines Servosystems (10) zum Erzeugen einer Anweisung, einen Fehler zwischen der aktuellen Position und der Zielposition zu eliminieren, indem in jedem Steuerzeitraum eine aktuelle Position und eine Zielposition verglichen werden, die aktuelle Position an das Servosystem (10) auszugeben, der folgende Merkmale aufweist:

einen Zähler (26), der Taktsignale einer Taktschaltung (25) zählt, wobei der Zähler (26) den Zählwert zurücksetzt, ansprechend auf ein Rücksetzsignal von einer Wechselleistungsversorgung (18) des Verschiebungssensors (2), und der zu einem Zeitpunkt gelatcht ist, wenn der Eingangssignal-Signalverlauf null ist;

einen Zeitnehmer (27) zum Ausgeben einer Erfassungszeit, wenn der Zähler (26) wegen des Sensors, der eine Verschiebung erfasst, gelatcht ist;

ein Speicherelement (28) zum Speichern von zumindest zwei vorhergehenden erfassten Verschiebungen zusammen mit Erfassungszeiten derselben; und

eine Bedienungseinheit (6) zum Extrapolieren, wenn eine Ausgabe von dem Servosystem (10) angefordert ist, der zumindest zwei vorhergehenden Verschiebungen auf eine aktuelle Verschiebung, basierend auf den zumindest zwei vorhergehenden Verschiebungen und Erfassungszeiten und einer Zeit, zu der eine Ausgabe angefordert wurde, und zum Ausgeben der aktuellen Verschiebung,

wobei das Speicherelement (28) außerdem $(D_i-D_{i-1})/(t_i-t_{i-1})$ speichert, und
die Bedienungseinheit (6) ausgebildet ist, um eine Verschiebung zu der Zeit $r+\tau$ als eine aktuelle Verschiebung $D_r$ abzuleiten, indem

$$D_r = D_i + (r+\tau-t_i) \times (D_i-D_{i-1})/(t_i-t_{i-1})$$

den in dem Speicherelement gespeicherten Wert von $(D_i-D_{i-1})/(t_i-t_{i-1})$ verwendet, und um die aktuelle Verschiebung $D_r$ als die aktuelle Position an das Servosystem auszugeben,
wobei $D_i$ und $D_{i-1}$ die zwei vorhergehenden Verschiebungen sind, $t_i$ und $t_{i-1}$ die zwei vorhergehenden Erfassungszeiten sind, r die Zeit ist, zu der eine Ausgabe angefordert wurde, Dr die aktuelle Verschiebung ist und $\tau$ eine Bedienungsverzögerung in der Bedienungseinheit (6) ist.

2. Ein Verschiebungserfassungsverfahren zum Erfassen einer Verschiebung mit einem Verschiebungssensor (2) unter Verwendung eines Phasenunterschieds zwischen einem Eingangssignal-Signalverlauf und einem Ausgangssignal-Signalverlauf, um, ansprechend auf eine Anforderung eines Servosystems (10) zum Erzeugen einer Anweisung, einen Fehler zwischen der aktuellen Position und der Zielposition zu eliminieren, indem in jedem Steuerzeitraum eine aktuelle Position und eine Zielposition verglichen werden, die aktuelle Position an das Servosystem (10) auszugeben, das folgende Schritte aufweist:

Ableiten einer Erfassungszeit unter Verwendung eines Zeitnehmers (27), wenn der Sensor eine Verschiebung erfasst, wobei das Ableiten der Erfassungszeit einen Zähler (26) aufweist, der Taktsignale einer Taktschaltung (25) zählt, wobei der Zähler (26) den Zählwert zurücksetzt, ansprechend auf ein Rücksetzsignal von einer Wechselleistungsversorgung (18) des Verschiebungssensors (2), und der zu einem Zeitpunkt gelatcht ist, wenn der Eingangssignal-Signalverlauf null ist, und einen Zeitnehmer, der die Erfassungszeit ausgibt, wenn der Zähler (26) gelatcht ist;
Speichern von zumindest zwei vorhergehenden erfassten Verschiebungen zusammen mit Erfassungszeiten derselben; und
Extrapolieren, wenn eine Ausgabe von dem Servosystem (10) angefordert ist, der zumindest zwei vorhergehenden Verschiebungen auf eine aktuelle Verschiebung, basierend auf den zumindest zwei vorhergehenden Verschiebungen und Erfassungszeiten und einer Zeit, zu der eine Ausgabe angefordert wurde, und Ausgeben der aktuellen Verschiebung unter Verwendung einer Bedienungseinheit (6), wobei das Speicherelement außerdem $(D_i-D_{i-1})/(t_i-t_{i-1})$ speichert, und
die Bedienungseinheit (6), eine Verschiebung zu der Zeit $r+\tau$ als eine aktuelle Verschiebung $D_r$ ableitet, indem

$$D_r = D_i + (r+\tau-t_i) \times (D_i-D_{i-1})/(t_i-t_{i-1})$$

den in dem Speicherelement gespeicherten Wert von $(D_i-D_{i-1})/(t_i-t_{i-1})$ verwendet und die aktuelle Verschiebung $D_r$ als die aktuelle Position an das Servosystem ausgibt,
wobei $D_i$ und $D_{i-1}$ die zwei vorhergehenden Verschiebungen sind, $t_i$ und $t_{i-1}$ die zwei vorhergehenden Erfassungszeiten sind, r die Zeit ist, zu der eine Ausgabe angefordert wurde, Dr die aktuelle Verschiebung ist und $\tau$ eine Bedienungsverzögerung in der Bedienungseinheit (6) ist.

**Revendications**

1. Capteur de déplacement (2) pour détecter un déplacement à l'aide d'une différence de phase entre une forme d'onde de signal d'entrée et une forme d'onde de signal de sortie, pour sortir, en réponse à une demande d'un système d'asservissement (10) de générer une instruction pour éliminer une erreur entre la position actuelle et la position cible en comparant une position actuelle et une position cible à chaque période de contrôle, la position actuelle vers le système d'asservissement (10), comprenant:

un compteur (26) comptant les signaux d'horloge d'un circuit d'horloge (25), où le compteur (26) remet à zéro la valeur de comptage en réponse à un signal de remise à zéro d'une alimentation de courant alternatif (18) du capteur de déplacement (2) et est verrouillé à un moment où la forme d'onde de signal d'entrée est nulle;
une minuterie (27) destinée à sortir un moment de détection lorsque le compteur (26) est verrouillé du fait de la détection d'un déplacement par le capteur;
une mémoire (28) destinée à mémoriser au moins deux déplacements détectés précédents ensemble avec leurs moments détection; et
une unité de fonctionnement (6) destinée à extrapoler, lorsqu'il est demandé une sortie du système d'asservissement (10), les au moins deux déplacements précédents à un déplacement actuel, sur base des au moins deux déplacements précédents et des moments de détection et un moment où la sortie était demandée, et à sortir le déplacement actuel,
la mémoire (28) mémorisant par ailleurs $(D_i - D_{i-1})/(t_i - t_{i-1})$, et
l'unité de fonctionnement (6) étant configurée pour dériver un déplacement au moment r+τ comme déplacement actuel $D_r$, par

$$D_r = D_i + (r + \tau - t_i)x(D_i - D_{i-1})/(t_i - t_{i-1})$$

à l'aide de la valeur de $(D_i - D_{i-1})/(t_i - t_{i-1})$ mémorisée dans la mémoire, et sortir le déplacement actuel $D_r$ vers le système d'asservissement comme position actuelle,
où $D_i$ et $D_{i-1}$ sont les deux déplacements précédents, $t_i$ et $t_{i-1}$ sont les deux moments de détection précédents, r est le moment où la sortie a été demandée, Dr est le déplacement actuel, et τ est un retard de fonctionnement dans l'unité de fonctionnement (6).

**2.** Procédé de détection de déplacement pour détecter un déplacement par un capteur de déplacement (2), à l'aide d'une différence de phase entre une forme d'onde de signal d'entrée et une forme d'onde de signal de sortie, pour sortir, en réponse à une demande d'un système d'asservissement (10) de générer une instruction pour éliminer une erreur entre la position actuelle et la position cible en comparant une position actuelle et une position cible à chaque période de contrôle, la position actuelle vers le système d'asservissement (10), comprenant les étapes consistant à:

dériver un moment de détection à l'aide d'une minuterie (27) lorsque le capteur détecte un déplacement, où le fait de dériver le moment de détection comprend un compteur (26) comptant les signaux d'horloge d'un circuit d'horloge (25), où le compteur (26) remet à zéro la valeur de comptage en réponse à un signal de remise à zéro d'une alimentation de courant alternatif (18) du capteur de déplacement (2) et est verrouillé à un moment où la forme d'onde de signal d'entrée est nulle, et une minuterie sortant le moment de détection lorsque le compteur (26) est verrouillé;
mémoriser au moins deux déplacements détectés précédents ensemble avec leurs moments détection; et
extrapoler, lorsqu'il est demandé une sortie du système d'asservissement (10), les au moins deux déplacements précédents à un déplacement actuel, sur base des au moins deux déplacements précédents et des moments de détection et un moment où la sortie était demandée, et à sortir le déplacement actuel, à l'aide d'une unité de fonctionnement (6),
la mémoire (28) mémorisant par ailleurs $(D_i - D_{i-1})/(t_i - t_{i-1})$, et
l'unité de fonctionnement (6) étant configurée pour dériver un déplacement au moment r+τ comme déplacement actuel $D_r$, par

$$D_r = D_i + (r + \tau - t_i)x(D_i - D_{i-1})/(t_i - t_{i-1})$$

à l'aide de la valeur de $(D_i - D_{i-1})/(t_i - t_{i-1})$ mémorisée dans la mémoire, et sortir le déplacement actuel $D_r$ vers le système d'asservissement comme position actuelle,
où $D_i$ et $D_{i-1}$ sont les deux déplacements précédents, $t_i$ et $t_{i-1}$ sont les deux moments de détection précédents, r est le moment où la sortie a été demandée, Dr est le déplacement actuel, et τ est un retard de fonctionnement dans l'unité de fonctionnement (6).

# F I G. 1

Coil Array ~14

18

20 21

~4

Signal
processor ~22

8

2

Operation unit ~6

Request r        Current position Dr

Servo system ~10

FIG. 2

FIG. 3

O-Crossing    Di, ti

Sensor I/F ~31

33

ALU

Memory
Di, ti
Di-1, ti-1 ~35

34

r ⟶ Memory

Intermediate data ~36

Servo I/F ~32

<u>6</u>

Request    $Dr = Di + (Di - Di-1)(r - ti)/(ti - ti-1)$

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003139563 A
- JP 2009002660 A
- EP 0580477 A1
- US 2004006443 A1
- US 5391970 A